# EUROPEAN PATENT APPLICATION

(11) **EP 0 808 054 A2**
(43) Date of publication of application: **19.11.1997**
(21) Application number: 97108051.0
(22) Date of filing: 16.05.1997
(51) Int. Cl.: H04N 1/047

(54) **Image reading apparatus**

(30) Priority: 17.05.1996 JP 123028/96; 27.11.1996 JP 316036/96
(71) Applicant: NEC CORPORATION, Tokyo (JP)
(72) Inventor: Matsui, Daisuke, Kakegawa-shi, Shizuoka (JP)
(74) Representative: VOSSIUS & PARTNER

(57) **Abstract**

An image reading apparatus that, when the speed for reading document exceeds a permissible reading speed of the reader 2, a data controller 100 automatically converts the image data 11 to converted data having the same line image data as the line image data following to the line image data supplied from the reader 2 when the relative moving speed between the reader 2 and the document 1 exceeds a predetermined value, and supplies the converted data to the image processor 5.

## Description

The present invention relates to an image reading apparatus, and in particular to an image reading apparatus that automatically changes a read line density when the reading speed is higher than a permissible reading speed.

Generally, a manually operated image reading apparatus that is used to read image data in a document has difficulty correlating its reading speed with its speed of the movement. When the speed of the image reading apparatus is greater than a predetermined speed, a normal reading operation can not be performed and an incomplete image is output.

Conventionally, an operator is informed off and on of the speed level of an image reading apparatus relative to a document to prevent the use of excessive speed, and so that the image reading apparatus can be moved at a speed at the upper limit for normal image reading. Therefore, since a normal reading operation can not be performed in a period during which the speed exceeds the permissible reading speed, the image reading apparatus has an included notification function for displaying an alarm on an LED display or for generating an alarm signal.

However, since the reading has been completed by the time an alarm signal is generated, and as a result an incomplete image is output, the reading operation must be repeated from the beginning. One example of such an image reading apparatus is a "hand scanner" that is described in Japanese Unexamined Patent Publication No. Hei 04-336852 which was published on November 25, 1992.

In this publication, a technique is disclosed whereby an operator is notified of the movement speed of a hand scanner by a gradual change in a display level or in the cycle for an alarm signal.

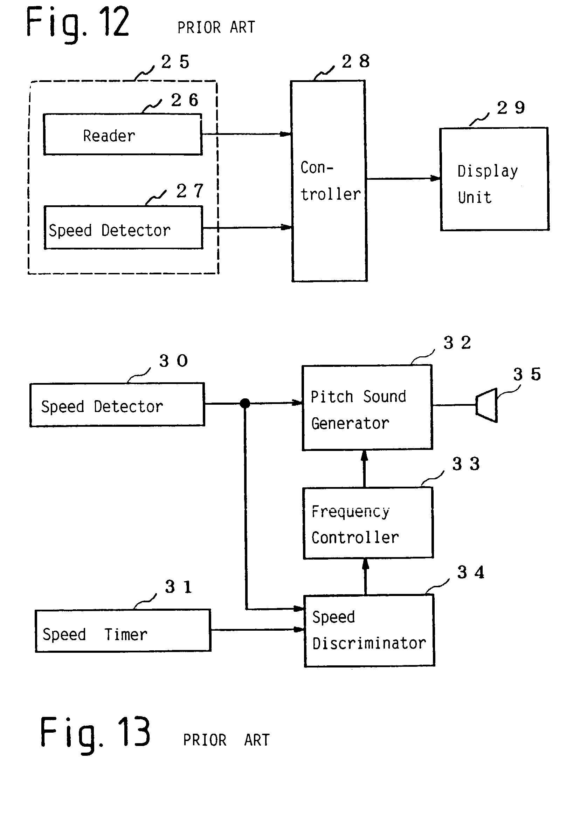

Fig. 12 is a block diagram illustrating a conventional image reading apparatus shown in the above Patent Publication.

The image reading apparatus in Fig. 12 comprises an image reading unit 25 for reading pictorial symbols while moving across a document; a display unit 29 for providing a step by step visual record of the reading speed for an operator; and a controller 28 for controlling a reading operation and a display operation.

The image reading unit 25 has a reader 26 for converting the pictorial symbols on the document into image data, and a speed detector 27 for detecting the speed of movement. As the image reading unit 25 is moved, the reader 26 reads the pictorial symbols on the document and transfers them as image data to the controller 28.

The speed detector 27 detects the speed of movement of the image reading unit 25, and outputs a speed signal to the controller 28. To prevent reading errors, the controller 28 ascertains whether the speed of movement is a predetermined speed, and to indicate an appropriate movement speed, turns on an LED in the upper limit of the movement speed range on the display unit 29.

Fig. 13 is a block diagram illustrating another conventional image reading apparatus shown in the above Patent Publication.

The image reading apparatus in Fig. 13 comprises a speed timer 31, for generating a reference signal; a speed detector, for detecting the speed of movement of the image reading apparatus; a speed discriminator 34, for detecting the speed of movement of the image reading apparatus, step by step; a pitch sound generator 32, for reporting the speed of movement of the image reading apparatus step by step; a loudspeaker 35, for externally outputting a pitch sound; and a frequency controller 33, for changing the frequency of a pitch sound in consonance with a result obtained by the speed discriminator 34.

The speed detector 30 detects the speed of movement of the image reading apparatus, and transmits a corresponding speed signal to the speed discriminator 34 and the pitch sound generator 32. The speed timer 31 transmits a constant reference signal to the speed discriminator 34, and thereafter the speed discriminator 34 compares the speed signal (pulse) received by the speed detector 30 with the reference signal received by the speed timer 31, to determine, for example, three movement speed levels for the image reading apparatus, and outputs the results to the frequency controller 33.

Upon receipt of the results from the speed discriminator 34, the frequency controller 33 changes the frequency of a pitch sound. The pitch sound generator 32 outputs, through the loudspeaker 35, a pitch sound (including a sustained sound) having the frequency set by the frequency controller 33.

Therefore, an operator can confirm the movement speed of the image reading apparatus is appropriate by referring to the change in the pitch of the sound.

A problem with the above described conventional image apparatus is that the pictorial symbols can not be read during a period where the speed exceeds the permissible reading speed, and as a result an incomplete image is output.

Another problem that has arisen is that, since an LED display and a pitch sound generator are required to prevent reading errors, the structure of the image reading apparatus is complicated, and the apparatus can not be made compactly and light and not be economical.

It is, therefore, one object of the present invention to provide an image reading apparatus that, when the speed for reading picture on a document exceeds a permissible reading speed, automatically changes a read line density and faithfully recovers the read document.

To achieve the above object, according to one aspect of the present invention, an image reading apparatus comprises a reader for reading picture in a document and generating image data having a plenty of line image data, a monitor for monitoring a relative moving speed between the reader and the document, and a data converter, in response to the moving speed, for automatically converting the image data to converted data having the same line image data as the line image data following to the line image data supplied from the reader when the moving speed exceeds a predetermined value. By this structure, it is possible to faithfully reproduce and recovers the picture of the document even if the relative moving speed exceeds a predetermined value corresponding to a possible reading speed of the reader.

More specifically, the data converter increases number of the line image data from the reader to n times (n is an integer) by converting the image data to the converted data when the moving speed increases to n times greater than a normal moving speed.

Further, according to the present invention, an image reading apparatus comprises a reader for reading picture in a document and generating image data having a plenty of line image data, a monitor for monitoring a relative moving speed between the reader and the document, and a data controller for automatically changing a line density of the image data in response to the relative moving speed. The data controller changes the line density when the relative moving speed exceeds a permissible value for the reading means, and then converts the image data to converted data having the same line image data as the line image data following to the line image data supplied from the reading means when the moving speed exceeds the permissible value.

An image reading apparatus may have an image processor for performing image processing of the image data from the reader, and a storage unit for storing data processed by the image processor. In this structure, the data controller determines the reading speed data responsive to the moving speed, when a reading speed exceeds a permissible reading speed, automatically converts the image data to converted data having the same line image data as the line image data following to the line image data supplied from the reader when the moving speed exceeds a predetermined value, and supplying the converted data to the image processor.

Another image reading apparatus of the present invention, the data controller determines the reading speed data responsive to the moving speed, when a reading speed exceeds a permissible reading speed, generates line density data representing number "n" when the moving speed increases to "n" times greater than a normal moving speed, storing the line density data to said storage unit with said data processed by said image processor, and reading the processed data from the storage unit n times by detecting the line density data. By this structure, it is possible to reduce the storage capacity of the storage unit. In addition, since the data transfer between the data controller, the data processor and storage unit does not take much time, data can be read rapidly.
Fig. 1 is block diagram illustrating an image reading apparatus according to a first embodiment of the present invention;
Fig. 2 is a flowchart for explaining the processing according to the first embodiment;
Fig. 3 is a diagram for explaining image data from a reader in Fig. 1;
Fig. 4 is a diagram for explaining converted image data from a reader in Fig. 1;
Fig. 5 is a diagram for explaining another converted image data from a reader in Fig. 1;
Fig. 6 is a block diagram illustrating an image reading apparatus according to a second embodiment of the present invention;
Fig. 7 is a flowchart for explaining the processing according to the second embodiment;
Figs. 8A and 8B are a diagram for explaining the relationship between a permissible reading speed and a read error;
Fig. 9A shows a schematic perspective view of a hand scanner of Fig. 6;
Fig. 9B shows a side view of the hand scanner of Fig. 9A;
Fig. 10 shows a schematic perspective view of the encoder and the roller of the hand scanner;
Fig. 11 is a diagram for explaining the operation of the encoder shown in Fig. 10;
Fig. 12 is a block diagram illustrating a conventional image reading apparatus; and
Fig. 13 is a block diagram illustrating another conventional image reading apparatus.

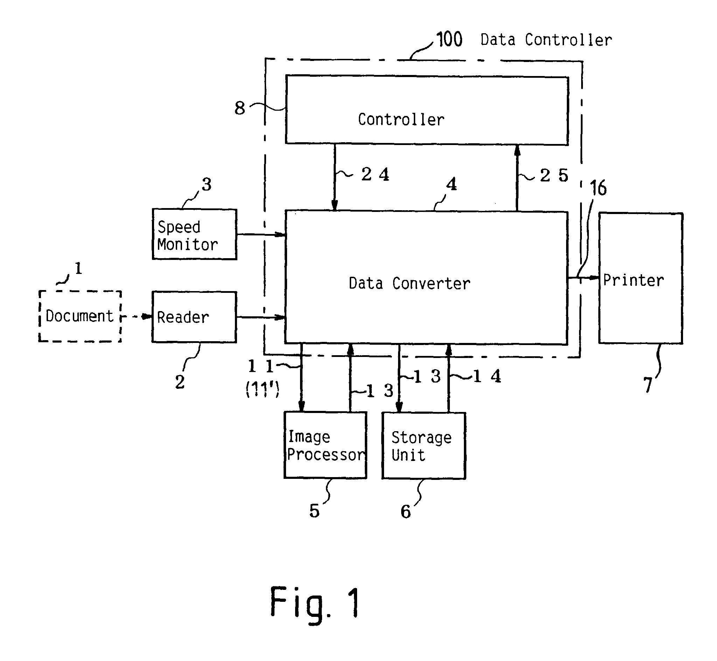

As shown in Fig. 1, an image reading apparatus of the first embodiment of the invention has a reader 2 for scanning and reading a picture or document 1; a speed monitor 3 for monitoring a moving speed of the reader 2; an image processor 5 for processing image data 11 that are output from the reader 2; a storage unit 6 for temporarily storing processed image data 13; a printer 7 for printing print data 16 which are generated by the processed image data 13 or data 14 from the storage unit 6; a data converter 4 for processing all data and for changing the line density of the data; and a controller 8 for controlling the entire apparatus. The data converter 4 and the controller 8 constructs a data controller 100.

The reader 2 has a scanner of a close contact type image sensor for scanning the document 1 and an output circuit for generating the image data 11 at a predetermined reading speed, for example, 8 lines/ms. The output circuit receives image data of the image sensor representing line-by-line scanned data and outputting the image data having a predetermined speed, as the image data 11. The speed monitor 3 detects the moving speed of the reader 2 and generates speed data 10 representing the moving speed of the reader 2. The data converter 4 converts the line density of the image data 11 corresponding to the speed data 10 and transfers the converted data 11' to the image processor 5, and transfers the processed image data 13 to the storage unit 6.

The controller 8 monitors the operations of the image processor 5, the storage unit 6 and the printer 7 via the data converter 4 in accordance with a device state signal 25. When the image data 13 are stored in the storage unit 6, the controller 8 outputs a control signal 24 to the data converter 4 and permits the data 14 to be output from the storage unit 6 to the printer 7.

Although the data stored in the storage unit 6 are generally only image data 13, obtained by image processing of the data 11, when the reading speed is increased, the line density data are also stored with the image data 13.

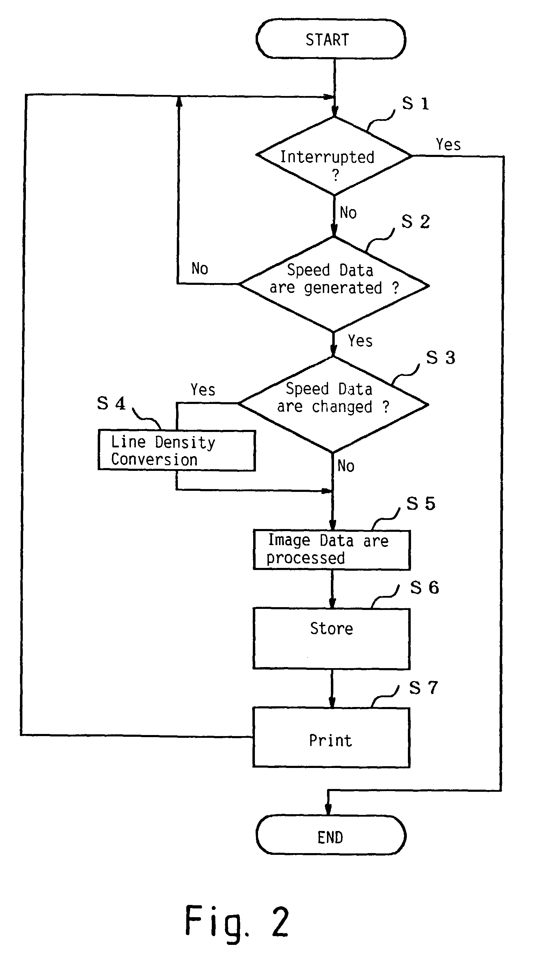

Fig. 2 is flowchart for the processing in this embodiment. The processing for this embodiment will be described in detail while referring to Figs. 1 and 2.

When the reader 2 begins to read the document 1, at step S1, the controller 8 determines whether or not the reading operation has been interrupted. This is determined by checking an interruption switch which is not shown in Fig. 1. When the reading operation has been interrupted, the operation is terminated. If the reading operation is not halted, then the controller 8 controls the data converter 4 to monitor the data speed 10. When the relative speed for the document 1 and the reader 2 is generated, the speed data 10 is generated and a check is performed at step S2 to determine whether the speed data is generated. If no speed data 10 has been output, program control returns to step S1.

When the data converter 4 receives the speed data 10 at the step S2, the data converter 4 permits the image processor 5 to begin the processing. In the processing, automatic line density conversion is performed by the data converter 4 and the speed data 10, the image data 11, the processed image data 13, the stored data 14 and the print data 16 are managed by the controller 8 via the data converter 4.

More specifically, when the speed data 10 has been output, at step S3 the data converter 4 determines whether or not the value of the speed data 10 are changed from a previous value. The previous value is stored in a register (not shown) in the data converter 4. If the value of the speed data 10 has changed, at step S4 the data converter 4 performs automatic line density conversion in the sub-scanning direction to generate the converted data 11'. The sub-scanning direction in this case is that direction in which the scanning is performed from the top to the bottom of the document 1. When there is no change in the speed data 10, any process of the line density conversion is not performed.

At step S5, the image data 11 from the reader 11 or the converted image data 11' are processed by the image processor 5. At step S6 the obtained image data 13 are stored in the storage unit 6. At step S7, the stored data 14 are output as print data 16 to the printer 7, as needed, and are recorded. After the data are recorded, program control by the controller 8 returns to step S1.

At step S4, the data converter 4 reduces the line density to 1/2, 1/3, . . . of the original density when an increase in the relative speed occurs, i.e., each time the value of the speed data 10 is increased, or increases the line density to 1/3, 1/2, . . . of the original density when a reduction in the relative speed occurs, that is, the value of the speed data 10 is decreased from the increased value.

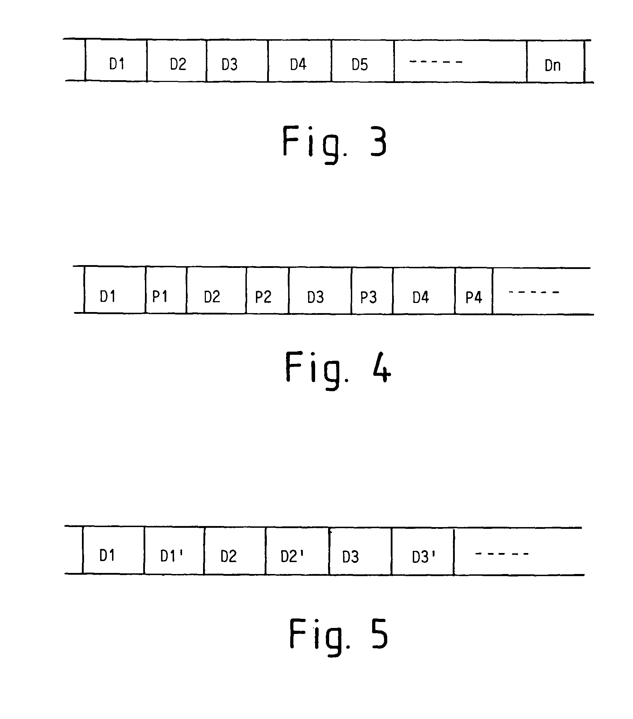

As shown in Fig. 3, since the reading speed and scanning speed of the reader 2 is constant, the reader 2 generates the image data 11 at the constant speed. The line image data D1, D2, D3, ... Dn are scanned image data of the document 1. When the value of the speed data 10 is normal (the moving speed of the reader 2 is normal), the data converter 4 supplies the image data 11 to the image processor 5.

When the value of the speed data 10 is increased from the normal value, or a value corresponding to a permissible reading speed of the reader 2, for example, it is increased by two times, the amount of the image data 11 received from the reader 2 in a unit time is reduced to 1/2 times, that is, the number of the line image data D1, D2, ... are reduced to 1/2. In this case, as shown in Fig. 4, the data converter 4 performs the line density conversion at the step S4 in Fig. 2 by adding line density data P1, P2, P3, ... to the image data 11 and output the data as the converted image data 11'. The line density data are then transferred to the image processor 5 and stored in the storage unit 6 with the processed image data 13.

Assuming that the document 1 has ten lines, a normal reading operation reads this as ten lines; however, when the moving speed of the reader 2 is increased, 10 lines can not be read. If the moving speed is doubled, only one half of the amount to be read, i.e., five lines, can be read. When the data for the five lines are output to the printer 7, the printed picture are shrunk vertically in comparison with the original document 1.

To avoid this problem, when the value of the speed data 10 is increased to "n" times, the data converter 4 generates the line density data indicating that only "1/n" of the amount of the normal data has been read, i.e., a value of "n" is additionally provided to the image data 11 as the line density data, so that the document 1 can be reproduced normally. Therefore, the data converter 4 increases number of the line image data from the reader to n times (n is an integer) by converting the image data to the converted data when the moving speed increases to n times greater than a normal moving speed. Since during this operation, the data for ten lines do not have to be stored, the storage capacity of the storage unit 6 can be reduced. In addition, since the data transfer does not take much time, data can be read rapidly.

When the printer 7 prints the processed image data 13 stored in the storage unit 6, the data converter 4 detects the line density data "n" from the storage unit 6. If the line density data are not stored, the converter 4 read the image data normally; however, the line density data "n" is detected, the processed image data having the line image data "n" are read from the storage unit 6 by "n" times repeatedly.

If the data stored in the storage unit 6 is print data obtained in advance by print conversion, compatibility with other models is easily obtained, and an extra conversion process is not required at the data output. As a result, the printing speed can be increased.

In step S4 in Fig. 2, the line density conversion may be performed by adding compensating data in replace to adding the line density data P1, P2, P3,... in Fig. 4. In this case, if the value of the speed data is increased by "n" times with respect to the normal speed data, the data converter 4 adds the same data D1', D2', D3',... to the line image data D1, D2, D3,... as shown in Fig. 5.

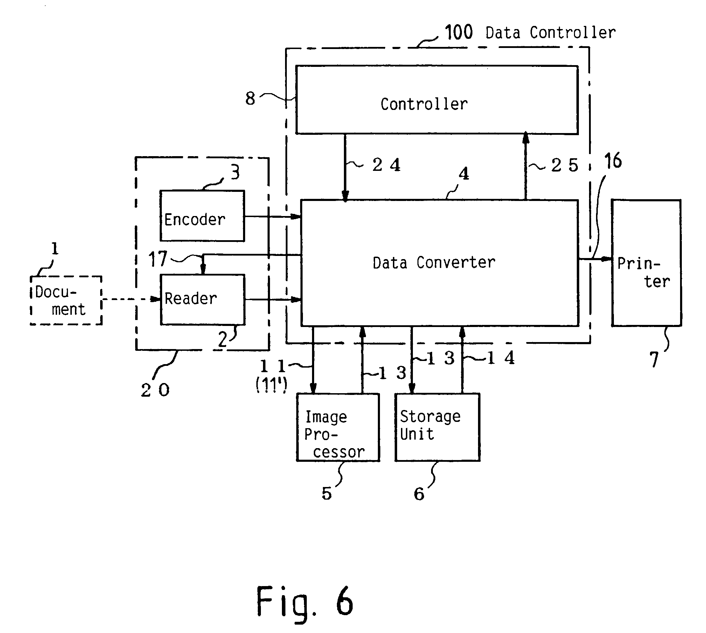

Fig. 6 is a block diagram illustrating an image reading apparatus according to a second embodiment of the present invention.

In Fig. 6, the image reading apparatus in this embodiment has a hand scanner 20 for reading the document 1. A data converter 41 processes the image data 11 that are read by the reader 22 and a reading pulse 12 that are output by an encoder 21 in the hand scanner 20, and for performing line density conversion for of all the data. The same reference numerals as are used in Fig. 1 are used in Fig. 3 to denote corresponding or identical components, and no explanation for them will be given.

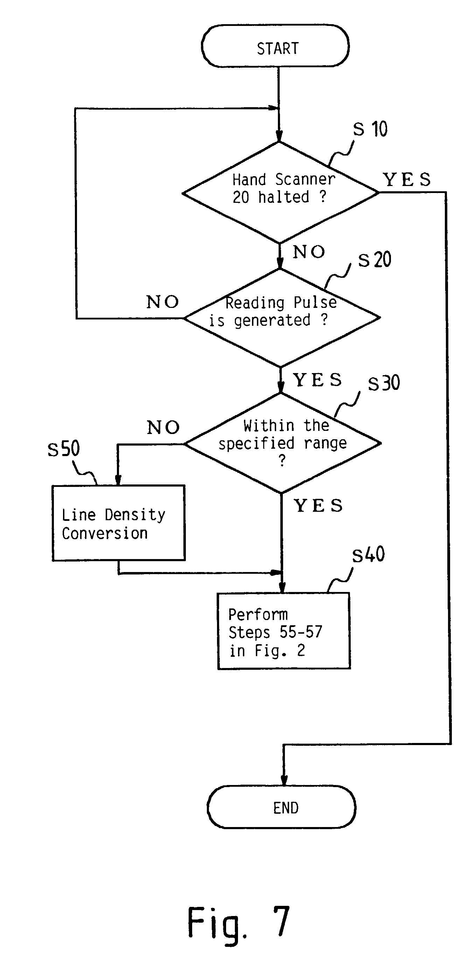

Fig. 7 is a flowchart showing the processing in the second embodiment. The processing will be described in detail while referring to Figs. 6 and 7.

When a relative speed is generated between the hand scanner 20 and the document 1, the reading pulse 12 is generated by the encoder 21. The data converter 41 detects the image data 11 in response to the timing of the reading pulse 12, and the detected image data 11 that are read responsive to the reading pulse 12 are transmitted via the data converter 41 to the image processor 5, which in turn processes the received data 11. The resultant image data 13 from the image processor 5 are stored in the storage unit 6. The stored data 14 or the image data 13 are output as print data 16 to the printer 7, as needed.

When the relative speed of the hand scanner 20 relative to that of the document 1 exceeds a permissible reading speed, the data converter 41 performs automatic line density conversion in the sub-scanning direction by generating the line density conversion signal 17 and compensating for the data 11. The sub-scanning direction in this case is that direction in which the scanning is performed from the top to the bottom of the document 1. With this process, the occurrence of reading errors is prevented, and the document 1 that is read is faithfully reproduced.

When an operator begins to read the document 1 using the hand scanner 20, at step S10, the data converter 41 determines whether the movement of the hand scanner 20 has been halted. When the movement of the hand scanner 20 has been halted, the operation is terminated. When the movement of the hand scanner 20 has not been halted, at step S20 a reading pulse 12, which is generated as the hand scanner 20 is moved, can be detected by the data converter 41. But is no reading pulse 12 is generated, program control by the controller 8 returns to step S10. When a reading pulse 12 is generated, at step S30 the data converter 4 determines whether the hand scanner 20 is moving at a speed that is within a specified speed range.

If, at step S30, the speed is within the specified range, at step S40 the image data 11 are transferred to the image processor 5 and program control returns to step S10. If the speed is outside the specified range, at step S50 an automatic line density conversion is performed by the data converter 41. In this case, the line density conversion signal 17 is supplied to the reader 22 and the lines density of the reader 22 is converted from line density P1 (lines/mm) to P2 (line/mm), wherein the P1 is larger than P2.

The speed at which the hand scanner 20 is moving is detected by the data converter 41 by employing the reading pulse 12 that is generated by the encoder 21 in proportion to the moving speed.

More definitely, when the speed of the movement of the hand scanner 20 exceeds the permissible reading speed, the reader 22 automatically changes the reading line density to 1/nth (n is an integer) of the original density in consonance with the number of reading pulses 12. The conversion of the reading line density to 1/nth of the original density prevents the occurrence of reading errors and provides a perfect reproduction of the pictorial symbols that are read.

More specifically, at step S30 the data converter 41 determines whether one reading pulse 12 is input within a specified period of time. If one pulse is input within the specified period, the image data 11 are detected in response to the reading pulse 12 and transferred to the image processor 5. If more than one pulse are input in the specified period, at step S50 the automatic line density conversion is performed by the data converter 41 by generating the line density conversion signal 17. As a result, even when the speed of movement of the hand scanner 20 exceeds a relative speed (normal speed) for a current line density, the occurrence of reading errors can be prevented merely by changing the reading line density of the reader 22, and the picture on the document 1 can be perfectly reproduced.

The reading in the reader 22 is commonly performed in a fine mode (7.70 lines/mm) when the hand scanner 20 is being moved manually. But if the speed of movement of the hand scanner 20 in the fine mode exceeds the permissible reading speed, the reading line density of the reader 22 is automatically changed from the fine mode to the standard mode (3.85 lines/mm) by the line density conversion signal 17. As a result, a reading line density is provided that is 1/2 of the original density (the permissible reading speed is two times of that for the fine mode), and to prevent of the occurrence of reading errors, of every two lines only one line is read.

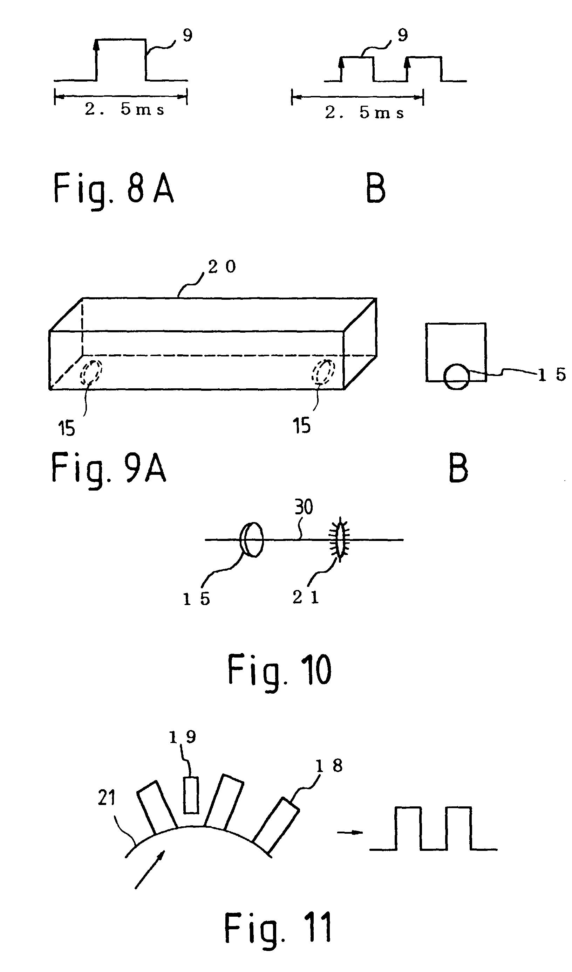

Figs. 8A and 8B are a diagram for explaining the relationship between the permissible reading speed and a reading error.

In Fig. 8A, when one reading pulse is produced in 2.5 ms, normal image reading with no reading errors can be performed at the permissible reading speed for the reader 22. But when two pulses are produced in 2.5 ms as shown in Fig. 8B, a reading error occurs. In other words, one reading pulse 12 is generated in 2.5 ms in the fine mode, while one reading pulse 12 is generated in 1.25 ms in the standard mode. The line density for lines is 7.70 lines/mm in the fine mode, while it is one half of that, i.e., 3.85 lines/mm, in the standard mode.

In the fine mode, all the lines that are read are stored in the storage unit 6. In the standard mode, since the amount of data that are read is one half that in the fine mode, one line is stored two times as shown in Fig. 5.

More specifically, the data converter 41 receives the fine mode data when the permissible reading speed is 1.25 ms < t ≤ 2.5 ms and transfer them to the image processor 5, while it receives standard mode data when the permissible reading speed is 1.25 ms or higher and generates the same data D1', D2', D3', ... after the line image data D1, D2, D3 .... as shown in Fig. 5. The line density conversion is flexibly performed in the standard mode, with one pulse in 2.5 ms, the same line is recorded twice in the storage unit 6, and with one pulse in 0.83 ms, the same line is recorded three times.

As is described above, as the period for scanning one line is reduced by moving the hand scanner 20 fast, the number of the like lines recorded in 1 mm is increased. In other words, the density of the lines that are recorded is reduced to 1/nth of the original.

Figs. 9A, 9B, 10 and 11 are diagrams for explaining the reading operation with the hand scanner 20 in Fig. 7.

Fig. 9A is a diagram illustrating the outline of the hand scanner 20 and the position of a roller 15; Fig. 9B is a diagram illustrating the connection of the roller 15 and the encoder 21; and Fig. 10 is a diagram for explaining the generation of a reading pulse by the encoder 21.

The roller 15 is attached to the bottom of the hand scanner 20, and the encoder 21 is attached to the rotary shaft 30 of the roller 15. Thus, as the hand scanner 20 is moved, the roller 15 is rotated, and accordingly, the encoder 21, which interacts with it, rotates.

Shield plates 18, which resemble gear teeth, are formed on the encoder 21. Since the shield plates 18 inhibit or permit the passage of light through a slit 19 as the encoder 21 rotates, the light pulse emitted at the slit 19 is detected by a light receiving device and the reading pulse 12 is generated. If the hand scanner 20 is shifted fast, the number of reading pulses 12 that are generated in the same period of time is increased.

In Fig. 7, although the image processor 5 receives the image data 11 that are read, regardless of the movement of the hand scanner 20, the image processor 5 fetches the image data 11, performs an A/D conversion of the image data 11 when the reading pulse 12 is generated by moving the hand scanner 20, and then writes the resultant data as image data 13 in the storage unit 6. The data 14 stored in the storage unit 6 are converted to print data 16 by the data converter 4, and the print data 16 are output to the printer 7.

The controller 8 employs a device state signal 25 received from the data converter 41 to monitor the operating conditions of the image processor 5, the storage unit 6 and the printer 7. When the image data 13 are accumulated in the storage unit 6, the controller 8 outputs a control signal 24 to the data converter 41 to permit the data 14 to be output from the storage unit 6 to the printer 7.

According to the second embodiment, when the reading speed is increased, the line density data is also stored with the image data 13 in replace to storing the same data D1', D2', D3', ... as shown in Fig. 5. In this case, Assuming that the document has ten lines, a normal reading operation reads this as ten lines; however, when the speed of the reader 2 relative to the document 1 is increased, 10 lines can not be read. If the reading speed is doubled, only one half of the reading amount, i.e., five lines, can be read. When the data that is read for five lines are output to the printer 7, the picture on the document 1 are shrunk vertically.

To avoid this phenomenon, line density data indicating that only one half the amount of data has been read, i.e., a value of "2," is additionally provided, so that the picture can be reproduced normally. During this operation, data for ten lines do not have to be stored and, the storage capacity of the storage unit 6 can be reduced. In addition, since the data transfer does not take much time, it is possible for the data to be read rapidly.

The structures wherein the controller 8, the data converters 4 and 41, the image processor 5 and the storage unit 6 are arranged are not limited to those shown in Figs. 1 and 7, and can be also constituted by, for example, a microcomputer that includes a microprocessor, a memory and a peripheral circuit. Further, when the data stored in the storage unit 6 are print data obtained in advance by print conversion, compatibility with other models is easily acquired, and an extra conversion process is not required when the data are output. As a result, the printing speed can be increased.

As for one example form of the data that are to be stored in the storage unit 6, image data 13 and line density data are stored, and the amount of image data 13 that is only the equivalent to that of the line density data is printed.

The storage unit 6 can be so structured that it is detachable from the data converter 4 or 41 . That is, a storage unit having a fast real time recording speed is attached to the apparatus, or a transmission module can be attached thereto that can transmit image data 13 to a personal computer or a facsimile machine by radio, without the image data 13 being stored.

The printer 7 can also be so structured that it is detachable from the data converter 4 or 41, and a general purpose printer can be connected thereto.

As is described above, according to the present invention, the image reading apparatus can perform automatic line density conversion in the sub-scanning direction in consonance with the speed of the reader relative to that of a document, and can thus compensate for the data that are read even when the reading speed for the reader or the hand scanner exceeds the permissible reading speed. As a result, the image reading apparatus can faithfully reproduce the pictorial symbols that are read from a document.

## Claims

1. An image reading apparatus comprising:
reading means for reading picture in a document and generating image data having a plenty of line image data;
monitoring means for monitoring a relative moving speed between said reading means and said document; and
data converting means, in response to said moving speed, for automatically converting said image data to converted data having the same line image data as said line image data following to said line image data supplied from said reading means when said moving speed exceeds a predetermined value.

2. An image reading apparatus as claimed in claim 1, wherein said data converter means increases number of the line image data from said reading means to n times (n is an integer) by converting said image data to said converted data when said moving speed increases to n times greater than a normal moving speed.

3. An image reading apparatus comprising:
reading means for reading picture in a document and generating image data having a plenty of line image data;
monitoring means for monitoring a relative moving speed between said reading means and said document; and
line density changing means for automatically changing a line density of said image data in response to said relative moving speed.

4. An image reading apparatus as claimed in claim 3, wherein said line density changing means changes said line density when said moving speed exceeds a permissible value of said reading means, and converts said image data to converted data having the same line imaqe data as said line imaqe data following to said line image data supplied from said reading means when said moving speed exceeds said permissible value.

5. An image reading apparatus as claimed in claim 3, wherein said line density changing means generates said line density to one that is 1/nth times (n is an integer) when said moving speed increases to n times greater than a normal moving speed, and converts said image data to converted data having the same line image data as said line image data following to said line image data supplied from said reading means to increase number of the line image data from said reading means to n times (n ia an integer).

6. An image reading apparatus comprising:
an image reader for reading picture in a document, and generating image data having a plenty of line image data;
a speed monitor for monitoring a relative moving speed between said reading means and said document;
an image processor for performing image processing of said image data;
a storage unit for storing data processed by said image processor; and
a data controller for determining said reading speed data responsive to said moving speed, and for, when a reading speed exceeds a permissible reading speed, automatically converting said image data to converted data having the same line image data as said line image data following to said line image data supplied from said reading means when said moving speed exceeds a predetermined value, and supplying said converted data to said image processor.

7. An image reading apparatus as claimed in claim 6, further comprising a printer for recording, as print data, data stored in said storage unit.

8. An image reading apparatus comprising:
an image reader for reading picture in a document, and generating image data having a plenty of line image data;
a speed monitor for monitoring a relative moving speed between said reading means and said document;
an image processor for performing image processing of said image data;
a storage unit for storing data processed by said image processor; and
a data controller for determining said reading speed data responsive to said moving speed, and for, when a reading speed exceeds a permissible reading speed, generating line density data representing number "n" when said moving speed increases to "n" times greater than a normal moving speed, storing said line density data to said storage unit with said data processed by said image processor, and reading said processed data from said storage unit n times by detecting said line density data.
